# EUROPÄISCHE PATENTSCHRIFT

(11) **EP 1 404 556 B1**
(45) Veröffentlichungstag und Bekanntmachung des Hinweises auf die Patenterteilung: **09.01.2008**
(21) Anmeldenummer: 02748775.0
(22) Anmeldetag: 14.06.2002
(51) Int. Cl.: B60T 8/50, B60T 13/68, B60T 15/18

(54) **BESCHLEUNIGTER DRUCKAUFBAU**
ACCELERATED PRESSURE BUILD-UP
MONTEE EN PRESSION ACCELEREE

(30) Priorität: 20.06.2001 DE 10129601
(43) Veröffentlichungstag der Anmeldung: 07.04.2004
(73) Patentinhaber: KNORR-BREMSE SYSTEME FÜR NUTZFAHRZEUGE GMBH, 80809 München (DE)
(72) Erfinder: WÖRNER, Dieter, 75031 Eppingen (DE); HERGES, Michael, 70825 Korntal-Münchingen (DE); DORSCH, Jürgen, 74199 Untergruppenbach (DE)
(74) Vertreter: Schönmann, Kurt
(86) Internationale Anmeldenummer: PCT/EP2002/006553
(87) Internationale Veröffentlichungsnummer: WO 2003/000525

(56) Entgegenhaltungen:
- DE-A- 3 931 761
- DE-A- 10 062 625
- DE-C- 10 018 400

## Beschreibung

Die Erfindung betrifft ein Bremssystem für ein Fahrzeug mit einem elektronischen Betriebsbremssystem (EBS) mit wenigstens einem Bremszylinder und einem dem Bremszylinder zugeordneten Steuerventil, hier Druckregelmodul oder DRM genannt, wobei das DRM wenigstens eine Steuerkammer sowie eine Arbeitskammer umfasst und die Arbeitskammer über eine Vorratsleitung an den Vorratsluftbehälter angeschlossen ist sowie die Steuerkammer über ein Einlass-Magnetventil mit dem Luftvorrat verbunden ist.

Zur Druckabsenkung ist die Steuerkammer über ein Auslass-Magnetventil und ggf. einen Schalldämpfer mit der Atmosphäre verbunden.

Durch Betätigung von Einlass- oder Auslassmagnetventil wird bei einer Bremsung ein von der elektronischen Bremssteuerung vorgegebener Druck in die Steuerkammer eingeregelt.

Der Druck in der Steuerkammer regelt dabei über einen Relaisventil-Mechanismus den Druck in der Arbeitskammer.

Die Steuerkammer des DRM ist des weiteren über eine Backup-Leitung und ein Backup-Ventil mit einem konventionellen Backupsystem verbunden, in dem über ein pneumatisches Fußbremsventil beim Bremsen ein Druck anliegt. Dieser dient dazu, bei Ausfall der elektrischen Druckregelung dennoch eine Bremsung des Fahrzeugs zu ermöglichen.

Dazu sind die Einlass- und Auslass-Magnetventile im unbestromten Zustand geschlossen, das Backup-Magnetventil im unbestromten Zustand offen.

Solche Druckregelmodule steuern den Druck im Bremszylinder sowohl bei einer Bremsung mit nicht zum Blockieren neigenden Rädern, als auch bei ABS-Eingriff.

Im Falle eines ABS-Eingriffes wird der Druck am Bremszylinder des zum Blockieren neigenden Rades stark abgesenkt. Läuft das Rad danach wieder an, muss der Druck möglichst schnell wieder angehoben werden, um möglichst schnell wieder die maximal mögliche Bremskraft an dem entsprechenden Rad aufzubauen und somit den Bremsweg des Fahrzeugs zu minimieren.

Bei den bisher verwandten EBS-Systemen wurde in die Steuerkammer Luft zur Druckerhöhung ausschließlich aus dem Vorratsanschluss über das Einlass-Magnetventil in die Steuerkammer geleitet.

Dies hatte insbesondere bei schnellen und starken Druckerhöhungen während ABS-Bremsungen den Nachteil, dass aufgrund des beschränkten Durchlassquerschnitts des Einlass-Magnetventils der Gradient der Druckerhöhung nicht ausreichend groß war.

Aufgabe der Erfindung ist es daher, ein Bremssystem zu schaffen, das es erlaubt, den Druck in der Steuerkammer bei ABS-Bremsungen schneller als bei den bislang bekannten Systemen zu erhöhen. Erfindungsgemäß wird dies dadurch gelöst, daß das Backupventil zusätzlich zum Einlassventil geöffnet wird, wenn die ABS-Logik eine starke und schnelle Druckerhöhung fordert. Durch das kurzzeitige Öffnen des Backup-Magnetventils zu Beginn der Druckerhöhung kann somit auch Luft aus dem Backupanschluss des Druckregelmoduls in die Steuerkammer geleitet und so eine schnellere Druckerhöhung erreicht werden.

Dies ist möglich, da bei ABS-Eingriff das Bremspedal immer betätigt ist und somit der Druck im Backupsystem im Moment der geforderten Druckerhöhung immer höher ist als in der Steuerkammer des DRM.

Durch das erfindungsgemäße Öffnen des Backup-Magnetventils wird, da sowohl über die Querschnitte des Einlass- als auch des Backup-Magnetventils belüftet wird, ein bedeutend höherer Druckgradient erreicht. Dies führt zu einem wesentlich schnelleren Ansprechen der Radbremsen nach einer ABS-bedingten Druckabsenkung.

In einer besonders bevorzugten Ausführungsform sind sowohl das Backup-Ventil wie das Einlassventil als Magnetventil, besonders bevorzugt als Proportionalventil, ausgebildet.

Neben dem Bremssystem stellt die Erfindung auch ein Verfahren zur schnellen Belüftung von elektronisch gesteuerten Fahrzeug-Bremssystemen während ABS-Bremsungen zur Verfügung

Die Erfindung soll anhand der Figuren beispielhaft beschrieben werden.

Es zeigen:
- Figur 1: den Aufbau eines Teiles eines Bremssystems gemäß dem Stand der Technik
- Figur 2: den Aufbau eines Bremssystems gemäß der Erfindung

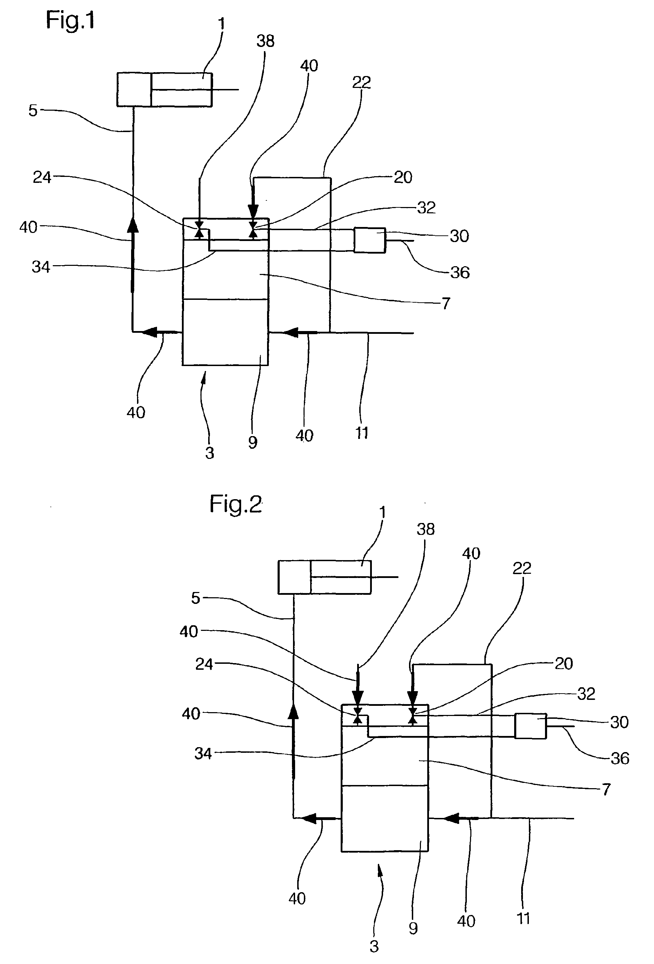

Figur 1 zeigt einen Ausschnitt eines Fahrzeug-Bremssystems, wobei in dem vorliegenden Fall lediglich für einen Bremszylinder eines Rades das Bremssystem gezeigt ist. Anhand dieses Ausschnittes kann das Wesen der Erfindung gezeigt werden.

Das Betriebsbremssystem umfasst einen einem Rad des Fahrzeuges zugeordneten Bremszylinder 1, der über ein Druckregelmodul (DRM) 3 angesteuert wird. Bremszylinder 1 und DRM 3 sind über eine Luftleitung 5 miteinander verbunden. Das DRM 3 umfasst eine Steuerkammer 7 sowie eine Arbeitskammer 9. Die Arbeitskammer 9 ist über Leitung 11 an einen Luftvorratsbehälter, der vorliegend nicht dargestellt ist, angeschlossen. Die Steuerkammer 7 wird über ein Einlass-Magnetventil 20, das über Leitung 22 mit dem Vorratsbehälter verbunden ist, angesteuert. Das Magnetventil 20 ist elektrisch mit einem Steuersystem 30 über die elektrische Leitung 32 verbunden. Soll die Bremse betätigt werden, beispielsweise weil das Fußbremspedal durch den Fahrer gedrückt wird, so wird dies vom Steuersystem 30 erfasst, ein entsprechendes elektrisches Signal über Leitung 32 dem Magnetventil 20 zugeführt und das Einlass-Magnetventil 20 entsprechend angesteuert, so dass eine vorbestimmte Menge Luft über Leitung 22 in die Steuerkammer gelangt, die wiederum den Luftfluss durch die Arbeitskammer und damit den Luftzufluss zum Bremszylinder bestimmt. Zur Druckabsenkung ist die Steuerkammer über ein nicht dargestelltes Auslass-Magnetventil und ggf. einen Schalldämpfer mit der Atmosphäre verbunden.

Bei ABS-Bremsungen wird bei einer Druckerhöhung nach vorangegangener Druckabsenkung eine derartige Bremsung von der Steuereinheit 30 erfasst und wiederum das Einlass-Magnetventil 20 geöffnet. Durch Betätigung von Ein- und Auslassmagnetventil wird bei einer Bremsung ein von der elektronischen Bremssteuerung vorgegebener Druck in die Steuerkammer eingeregelt.

Das Backup-Magnetventil 24, das über die elektrische Leitung 32 mit dem Steuersystem 30 verbunden ist, stellt bei Systemen gemäß dem Stand der Technik bei Ausfall des elektrischen Bremssystems ein pneumatisches Notfall-Bremssystem zur Verfügung. Das Backup-Magnetventil wurde in den Systemen gemäß dem Stand der Technik daher lediglich in Notfällen geöffnet, d.h. wenn der pneumatische Backup-Bremskreis als Notbremskreis eingesetzt wurde.

In Figur 2 ist ein Bremssystem gemäß der Erfindung dargestellt. Gleiche Bauteile wie in Figur 1 sind mit denselben Bezugsziffern belegt.

Prinzipiell ist der Aufbau derselbe wie in Figur 1. Jedoch umfasst das Steuergerät 30 Mittel zum Öffnen des Backup-Ventils 24 im Falle, dass am Eingang 36 des Steuergerätes 30 ein Signal, das auf eine ABS-Bremsung hinweist, anliegt. Es strömt dann durch das erfindungsgemäße kurzzeitige Öffnen des Backup-Magnetventils 24 zusätzlich zum Einlass-Magnetventil 20 Luft aus dem Backupanschluss 38 in die Steuerkammer 7 des Steuerventils 3 ein. Da in einem solchen Fall sowohl über den Querschnitt des Einlass-Magnetventils 20 als auch des Backup-Magnetventils 24 die Steuerkammer belüftet wird, wird ein bedeutend höherer Druckgradient erreicht. Dies wiederum bedeutet, dass die Druckerhöhung in der Arbeitskammer nach vorausgegangener Druckabsenkung schneller erfolgt und somit dem Bremszylinder in kürzerer Zeit Druckluft zugeführt wird, wodurch der Bremszylinder schneller als bei einem System gemäß dem Stand der Technik, wie in Figur 1 gezeigt, anspricht.

In den Figuren 1 und 2 sind zur Verdeutlichung der Erfindung die Luftführung mit schwarz markierten Pfeilen 40 während einer ABS-bedingten Druckerhöhung gezeigt.

Mit der Erfindung wird somit erstmals ein System angegeben, mit dem ein beschleunigter Druckaufbau bei ABS-Bremsungen nach vorausgegangener Druckabsenkung in einem elektronischen Bremssystem (EBS) erreicht werden kann.

### Bezugszeichenliste

- 1: Bremszylinder
- 3: Druckregelmodul (DRM)
- 5: Leitung
- 7: Steuerkammer des DRM
- 9: Arbeitskammer des DRM
- 11: Luftleitung zum Luftvorratsbehälter
- 20: Einlass-Magnetventil
- 22: Verbindungsleitung
- 24: Backup-Magnetventil
- 30: Steuersystem
- 32, 34: elektrische Leitungen zu den Magnetventilen 20, 24
- 36: Eingang des Steuergerätes
- 38: Luftanschluss des Backup-Magnetventils
- 40: Luftrichtung bei ABS-Bremsung

## Patentansprüche

1. Bremssystem für ein Fahrzeug,
umfassend ein elektronisches Betriebsbremssystem mit wenigstens einem Bremszylinder (1) und einem dem Bremszylinder (1) zugeordneten Druckregelmodul (3), wobei das Druckregelmodul (3) eine Steuerkammer (7) sowie eine Arbeitskammer (9) umfasst
1.1 die Arbeitskammer (9) ist über eine Vorratsleitung (11) an einen Luftvorrat angeschlossen
1.2 die Steuerkammer (7) ist über eine Verbindungsleitung (22) und ein Einlassventil (20) an den Luftvorrat angeschlossen
1.3 die Steuerkammer ist über ein Auslassventil mit der Atmosphäre verbunden
1.4 die Steuerkammer (7) ist des weiteren über eine Backupleitung (38) und ein Backupventil (24) mit einem Backup-Bremssystem verbunden
1.5 ein Steuersystem (30) zum Ansteuern wenigstens des Einlassventils (20) sowie des Backupventils (24),
**dadurch gekennzeichnet, dass**
1.6 das Steuersystem (30) derart ausgelegt ist, dass das Backupventil (24) zusammen mit dem Einlassventil (20) geöffnet wird und damit Luft in die Steuerkammer (7) einströmt, wenn am Steuersystem (30) ein ABS-Signal zur Druckerhöhung nach vorangegangener Druckabsenkung anliegt, bzw. vom Steuersystem generiert wurde.

2. Bremssystem gemäß Anspruch 1, **dadurch gekennzeichnet, dass**
das Backupventil (24) und das Einlassventil (20) Magnetventile sind.

3. Bremssystem gemäß einem der Ansprüche 1-2, **dadurch gekennzeichnet,**
**dass** Einlass- und Auslassventil zu einer Einheit zusammengefasst sind.

4. Bremssystem gemäß einem der Ansprüche 1-3, **dadurch gekennzeichnet,**
**dass** das Einlassventil ein Proportionalventil ist.

5. Verfahren zur schnellen Belüftung von Fahrzeug-Bremssystemen gemäß einem der Ansprüche 1 bis 4, bei ABS-Bremsungen umfassend nachfolgende Schritte:
5.1 es wird mittels einer Sensorik ermittelt, ob eine ABS-Bremsung vorliegt und ein ABS-Signal zur Druckerhöhung nach vorangegangener Druckabsenkung an das Steuersystem (30) des Fahrzeug-Bremssystems übermittelt oder vom Steuersystem generiert wird; und
5.2 es wird bei Vorliegen eines ABS-Signals zur Druckerhöhung nach vorangegangener Druckabsenkung sowohl über das Einlassventil (28) wie das Backupventil (24) Luft in die Steuerkammer (7) wenigstens eines Steuerventils (3) des Fahrzeugbremssystems eingeleitet.

## Claims

1. Brake system (1) for a vehicle,
comprising an electronic service brake system with at least one brake cylinder (1) and a pressure regulator module (3) associated with said brake cylinder (1), with said pressure regulator module (3) including a control chamber (7) as well as a working chamber (9),
1.1 said working chamber (9) is connected to an air reservoir via a reservoir pipe (11),
1.2 said control chamber (7) is connected to said air reservoir via a connecting pipe (22) and an inlet valve (20);
1.3 said control chamber is connected to the atmosphere via an outlet valve;
1.4 said control chamber (7) is moreover connected to a back-up brake system via a back-up line (38) and a back-up valve (24);
1.5 a control system (30) is provided for controlling at least said inlet valve (20) as well as said back-up valve (24),
**characterised in that**
1.6 said control system (30) is so designed that said back-up valve (24) is opened together with said inlet valve (30) and hence air flows into said control chamber (7) when, after previous pressure reduction; an anti-locking signal is applied to said control system (30) for pressure increase or has been generated by the control system, respectively.

2. Brake system according to Claim 1, **characterised in that**
said back-up valve (24) and said inlet valve (20) are solenoid valves.

3. Brake system according to any of the Claims 1 to 2, **characterised in that**
said inlet and outlet valves are combined so as to form a single unit.

4. Brake system according to any of the Claims 1 to 3, **characterised in that**
said inlet valve is a proportional valve.

5. Method of rapid aeration of vehicle brake systems according to any of the Claims 1 to 4 in the event of anti-locking brake application, comprising the following steps:
5.1 a sensor means is employed to determine whether anti-locking brake application is involved and, after previous pressure reduction, an anti-locking signal is transmitted for pressure increase to said control system (30) of the vehicle brake system or is generated by said control system, respectively; and
5.2 when an anti-locking signal for pressure increase is present after previous pressure reduction, air is introduced, via both said inlet valve (20) and said back-up valve (24), into the control chamber (7) of at least one control valve (3) of the vehicle brake system.

## Revendications

1. Système de freinage (1) pour un véhicule,
comprenant un système électronique de freinage de service à au moins un cylindre de frein (1) et un module régulateur de pression (3) affecté audit cylindre de frein (1), audit module régulateur de pression (3) renfermant une chambre de commande (7) ainsi qu'une chambre de travail (9),
1.1 ladite chambre de travail (9) est raccordée à un réservoir d'air via un conduit de réservoir (11),
1.2 ladite chambre de commande (7) est raccordé audit réservoir d'air via un conduit de connexion (22) et une soupape d'entrée (20);
1.3 ladite chambre de commande est raccordé à l'atmosphère via une soupape de sortie;
1.4 ladite chambre de commande (7) est, au plus, raccordée à un système de freinage backup via un conduit backup (38) et une soupape backup (24);
1.5 un système de commande (30) est disposé à commander au moins ladite soupape d'entrée (20) ainsi que ladite soupape backup (24),
**caractérisé en ce**
1.6 que ledit système de commande (30) est conçu d'une telle façon que ladite soupape backup (24) s'ouvre ensemble avec ladite soupape d'entrée (30) et donc de l'air s'écoule dans ladite chambre de commande (7), quand, suivant une décompression précédente, un signal d'antiblocage est appliqué audit système de commande (30) pour une montée de la pression ou était respectivement engendré par le système de commande.

2. Système de freinage selon la revendication 1, **caractérisé en ce**
**que** ladite soupape backup (24) et ladite soupape d'entrée (20) sont des électrovannes.

3. Système de freinage selon une quelconque des revendications 1 à 2,
**caractérisé en ce**
**que** lesdites soupapes d'entrée et de sortie sont combinées en formant une seule unité.

4. Système de freinage selon une quelconque des revendications 1 à 3,
**caractérisé en ce**
**que** ladite soupape d'entrée est une soupape proportionnelle.

5. Procédé d'aération rapide des systèmes de freinage de véhicules selon une quelconque des revendications 1 à 4 au cas de serrage de frein d'antiblocage, comprenant les étapes suivantes :
5.1 un moyen détecteur est utilisé afin d'établir, si le frein d'antiblocage est serré, et, suivant une décompression précédente, un signal d'antiblocage est transmis pour une montée de la pression audit système de commande (30) du système de freinage du véhicule ou est respectivement engendré par ledit système de commande ; et
5.2 quand un signal d'antiblocage pour une montée de la pression est présent suivant une décompression précédente, de l'air est introduit via les deux soupapes, ladite soupape d'entrée (20) et ladite soupape backup (24), dans ladite chambre de commande (7) d'au moins une vanne pilote (3) du système de freinage du véhicule.
